Europäisches Patentamt

European Patent Office

Office européen des brevets

(19)

(11) Veröffentlichungsnummer: **0 118 115**
**B1**

(12) **EUROPÄISCHE PATENTSCHRIFT**

(45) Veröffentlichungstag der Patentschrift:
09.12.87

(21) Anmeldenummer: **84102216.3**

(22) Anmeldetag: **02.03.84**

(51) Int. Cl.⁴: **B 64 D 1/00**, B 64 D 17/38

(54) Anordnung zum Trennen einer Last von einem damit verbundenen Fallschirm.

(30) Priorität: **08.03.83 DE 3308177**

(43) Veröffentlichungstag der Anmeldung:
**12.09.84 Patentblatt 84/37**

(45) Bekanntmachung des Hinweises auf die Patenterteilung:
**09.12.87 Patentblatt 87/50**

(84) Benannte Vertragsstaaten:
**FR GB IT**

(56) Entgegenhaltungen:
**FR - A - 1 587 793**
**GB - A - 272 844**
**US - A - 2 452 990**

(73) Patentinhaber: **AUTOFLUG GMBH,**
**Industriestrasse 10 Postfach 1180, D-2084 Rellingen**
**(DE)**

(72) Erfinder: **Nöhren, Hubert, Dipl.-Ing., Astweg 51,**
**D-2000 Hamburg 54 (DE)**
Erfinder: **Stürzenbecher, Bruno, Ochsenzoller**
**Strasse 67, D-2000 Norderstedt (DE)**

(74) Vertreter: **Glawe, Delfs, Moll & Partner Patentanwälte,**
**Postfach 26 01 62 Liebherrstrasse 20,**
**D-8000 München 26 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Anordnung zum Trennen einer Last von einem damit verbundenen Fallschirm beim Aufprall auf dem Erdboden, mit einem an der Aufprallseite der Last angeordneten, durch seine Aufprallbewegung relativ zur Last die Trennung auslösenden Aufprallglied, wobei die Verbindung der Last mit dem Fallschirm unmittelbar durch die Relativbewegung des Aufprallglieds bzw. eines damit mechanisch verbundenen Teils unter der Wirkung der Aufprallenergie lösbar ist.

Bei bekannten Vorrichtungen zum Trennen einer Last von einem damit verbundenen Fallschirm (DE-B-19 48 543) ist zwischen Last und Fallschirm eine Lastentrennkupplung mit pyrotechnischer Trenneinrichtung vorgesehen, die durch eine vom Aufsetzen der Last auf dem Erdboden herrührende Bewegung des Aufprallglieds ausgelöst wird. Diese Anordnung hat den Nachteil, dass sie wegen der Notwendigkeit von Fremdenergie und wegen der vielgliedrigen Funktionskette zwischen dem Aufprallglied und der Trennkupplung aufwendig und störungsanfällig ist, wobei zu den Störungsmöglichkeiten auch eine Funktionsverzögerung zu rechnen ist.

Es sind Trennkupplungen bekannt, die nicht auf Hilfsenergie angewiesen sind und die auf die beim Landen der Last auftretende Verzögerung oder Entlastung ansprechen (DE-B-1 226 884, DE-A-29 49 452, DE-B-25 03 936, DE-B-25 52 935, DE-A-28 34 435). Damit solche Kupplungen nicht unbeabsichtigt aufgrund dynamischer Vorgänge während des Abwurfs ansprechen, müssen sie eine hohe Ansprechschwelle oder geeignete Sicherungsglieder enthalten, durch die auch das Ansprechen beim Landen der Last zumindest verzögert werden kann. Sie haben auch den Nachteil, dass sie oberhalb der Last angeordnet werden und daher während des Abwurfs oder beim Landen auf die Last fallen und diese beschädigen können. Schliesslich ist bei diesen bekannten Anordnungen der Nachteil zu verzeichnen, dass auch nach dem Auslösen der Trennkupplung meist noch irgendwelches Gurtzeug an der Last verbleibt und deren Funktion beeinträchtigen kann.

Dies ist zum Beispiel bei einer vorbekannten Trennkupplung der Fall (DE-B-11 42 109), bei der die Trennung durch Zusammenpressen eines Balges beim Auftreffen der Last auf den Boden auf pneumatischem Wege über eine Gasleitung erfolgt. Zusätzlich zu dem Nachteil, dass zumindest ein Teil des Gurtzeuges nach dem Trennungsvorgang bei der Last verbleibt, wirkt die Trenneinrichtung auch indirekt und wegen der Verzögerungen durch die Pneumatik verhältnismässig langsam.

Bei einer Vorrichtung der eingangs genannten Art und gemäss dem Oberbegriff des Anspruchs 1 (US-A-24 52 990) erfolgt die Trennung vom Fallschirm zwar auf mechanische Weise und daher auch möglicherweise schneller. Es ist aber notwendig, dass die Last in einem kompliziert aufgebauten Käfig untergebracht ist, in dem sie auch nach dem Trennen des Fallschirms verbleibt und daher nach dem Absetzen erst aus demselben befreit werden muss. Es lässt sich auch die Möglichkeit nicht ausschliessen, dass beim Aufsetzen auf den Boden die zwei zueinander verschiebbaren Teile des Käfigs verkanten, so dass die Trennvorrichtung nicht wirkt.

Die Aufgabe der Erfindung besteht darin, eine Anordnung der eingangs genannten Art zu schaffen, die einfach aufgebaut ist und verzögerungsfrei und mit grosser Sicherheit die Last beim Landen vom Fallschirm und anhängendem Gurtzeug befreit, und zwar insbesondere auch bei hartem Landen.

Die erfindungsgemässe Lösung besteht darin, dass die Last mit dem Fallschirm durch eine Mehrzahl von die Last teilweise umschlingenden Gurten verbunden ist, deren freie Enden durch ein die Gurte beim Aufprall freigebendes Auslöseglied miteinander verbunden sind.

Die Verbindung des Gurtzeugs mit der Last erfolgt also durch eine äussere Fesselung der Last und ohne die Notwendigkeit lastseitiger Verbindungsglieder, die zur Übertragung der vollen Lastkräfte eingerichtet sein müssten und auf die deshalb bei der Konstruktion der Last in höherem Masse Rücksicht genommen werden müsste als bei äusserer Fesselung. Die Gurtendenverbindungen lassen sich leicht so ausbilden, dass sie in einfacher Weise geschlossen und getrennt werden können. Schliesslich kann die zu trennende Verbindung in unmittelbarer Nähe des Aufprallglieds angeordnet werden, so dass die Trennmittel und die Einrichtungen zur Kraft- und Bewegungsübertragung entsprechend einfach ausfallen können.

Die erfindungsgemässe Lösung ist insbesondere dann unaufwendig, wenn das Aufprallglied als Landestossdämpfer ausgebildet ist, weil das Aufprallglied in doppelter Funktion genutzt wird und die ohnehin für die Dämpfungsfunktion erforderliche Relativbewegung des Aufprallglieds gegenüber der Last als Trennbewegung für die Verbindung der Last mit dem Gurtzeug genutzt werden kann.

Wenn damit gerechnet werden muss, dass die Last schräg auf den Boden aufkommt, ist es zweckmässig, das Aufprallglied als eine die Aufprallkante der Last bildende Platte auszubilden. Dann wird nämlich die erforderliche Relativbewegung des Aufprallglieds gegenüber der Last unabhängig davon eintreten, an welcher Stelle der Kante die Last zuerst auf dem Boden auftrifft.

Die zu trennende Verbindung kann gemäss der Erfindung ein unter dem Einfluss der Aufprallenergie zerstörbares Auflöseglied umfassen. Bei einer vorteilhaften Ausführungsform ist dieses Auslöseglied zerschneidbar und ist ihm ein von dem Aufprallglied betätigbares Messer zugeordnet. Bei einer anderen Ausführungsform ist das Auslöseglied zur Übertragung der Aufprallkraft von dem Aufprallglied auf die Last ausgebildet und unter dieser Kraft zerbrechbar bemessen. Beispielsweise kann es von einem die Gurtenden verbindenen Ring aus sprödem Werkstoff wie Glas bestehen, der durch Sollbruchstellen, innere Vorspannung oder die Anordnung der äusseren Krafteinleitungspunkte in solcher Weise bricht oder in kleine Teile zerfällt, dass die Gurtenden freigegeben werden.

Nach einem anderen Merkmal der Erfindung kann die zu trennende Verbindung ein Auslöseglied umfassen, das durch die Aufprallenergie aus seiner Verbindungsstellung in eine Stellung verschiebbar ist, in der die Gurtenden voneinander bzw. von diesem Auslöseglied gelöst sind. Dieses Auslöseglied weist zweckmässigerweise mindestens einen quer zur Gurtendenrichtung verlaufenden, in seiner Verbindungsstellung in ein Gurtende bzw. in die Gurtenden eingreifenden Haltefinger auf, der bei der Aufprallverschiebung aus den Gurtenden herausziehbar ist.

Ein Ausführungsbeispiel für eine solche zentrale Lösbarkeit besitzt eine Leine, die sämtliche Gurtenden verbindet und beim Aufprall durch mindestens einen Schnitt aufgetrennt wird. Eine von der Erfindung bevorzugte, weil besonders sichere Ausführung zeichnet sich dadurch aus, dass das Auslöseglied eine sternförmig sich kreuzende Stränge bildende Schnur ist und das Messer ringförmig zum Kreuzungspunkt der Schnur angeordnet ist, so dass jeder Strang im allgemeinen mehrfach, bei zufälliger Schrägwirkung des Messers aber zumindest einfach durchgetrennt wird. Dabei wird zweckmässigerweise die Lage der Schnurstränge innerhalb des vom Messer umschriebenen Kreuzungsbereichs durch starr miteinander verbundene Führungsteile für die Stränge und das Messer gesichert.

Eine andere Ausführungsform mit zentraler Lösemöglichkeit umfasst einen mehrere verbindende Gurtenden quer durchdringenden Haltefinger, der durch einen die Gurtenden führenden Deckel vorragt und hinter diesem Deckel an einem Halteteller angeordnet ist, welcher über Betätigungsbolzen mit dem Aufprallglied verbunden ist. Beim Aufprall wird der Haltefingerträger gegen eine nachgiebige Kraft zurückgedrückt und zieht dadurch den Haltefinger aus den Gurtenden heraus, während diese von dem genannten Deckel festgehalten werden.

Eine solche zentrale Trennanordnung wird zweckmässigerweise mittig im Verhältnis zu dem plattenförmig ausgebildeten Aufprallglied angeordnet, wobei das Aufprallglied an der Last so befestigt ist, dass es bei Beaufschlagung irgendeiner Kante sich auch in seinem Mittelbereich der Last nähert, um dort einen Teil des Trennmechanismus zu betätigen. Diese Bewegungsmöglichkeit des Aufprallglieds bei Beaufschlagung eines beliebigen Punkts seiner Kante erreicht man nach der Erfindung dadurch, dass es an seinem Rand durch eine zusammendrückbare und nicht ausziehbare Halteeinrichtung an der Last gehalten ist. Beim Aufschlag an einem Punkt seiner Kante vermag es sich daher im Bereich dieses Punkts der Last zu nähern, während sein gegenüberliegender Umfangspunkt dank der nicht ausziehbaren Halterung an der Last sich nicht von der Last entfernen kann. Somit muss auch der Mittelteil des Aufprallglieds, der mit dem Trennmechanismus in Verbindung steht, sich der Last nähern. In diesem Zusammenhang ist es zweckmässig, wenn das Aufprallglied an seinem Rand eine mehr als doppelt so grosse freie Bewegungsstrecke zur Last hin besitzt als in der Mitte. Zum einen wird dadurch eine maximale Bewegungsstrecke des Aufprallglieds in der Mitte zur Betätigung des Trennmechanismus sichergestellt, und zum anderen kann dabei das Prallglied an der Aufprallstelle die maximale Bewegungsstrecke nur dann durchlaufen, wenn es sich in seinem Mittelbereich unter Energieverzehr und dadurch Landestossdämpfend verformt. Die zusammendrückbare aber nicht ausziehbare Verbindung zwischen Aufprallglied und Last kann nach der Erfindung durch eine Mehrzahl von über den Umfang verteilten Zugbolzen erreicht werden, die mit einem nachgiebigen Gegendruckorgan versehen sind, beispielsweise Druckfedern oder verformbaren Kunststoffhülsen oder einem am gesamten Rand zwischen Aufprallglied und Last umlaufenden Kragen aus verformbarem Material wie Blech oder Kunststoff.

Dieses Gegendruckorgan kann energieverzehrend im Hinblick auf die Landestossdämpfung bemessen werden.

An den die Gurtenden bildenden Gurten oder an einem dieser Gurte können Federzüge vorgesehen sein, die im gestreckten Zustand der Gurte gespannt sind und die dazu dienen, die gelösten Gurtenden aus dem Verbindungsbereich herauszuziehen, um dadurch die Befreiung der Last von dem Gurtzeug zu erleichtern. Damit die Gurtenden nicht zwischen dem plattenförmigen Prallglied und der Last eingeklemmt werden können, verlaufen sie zweckmässigerweise in geschützten Gurtführungen, nämlich beispielsweise in hinter die sonstige Lastoberfläche zurücktretenden Nuten oder zwischen von der Lastoberfläche aufragende Vorsprüngen.

Die Erfindung ergibt sich aus der folgenden Beschreibung von bevorzugten Ausführungsbeispielen anhand der Zeichnung. Darin zeigen:

Fig. 1 eine perspektivische Gesamtansicht der Last-Fallschirm-Anordnung,

Fig. 2 eine Teilansicht des aufprallseitigen Endes der Last beim Landen,

Fig. 3 eine Stirnansicht des Aufprallendes der Last nach abgenommener Aufprallplatte,

Fig. 4 einen Teilschnitt durch die Last gemäss der in Fig. 3 angedeuteten Schnittlinie,

Fig. 5 eine der Fig. 3 entsprechende Ansicht einer zweiten Ausführungsform,

Fig. 6 eine der Fig. 3 entsprechende Ansicht einer dritten Ausführungsform,

Fig. 7 einen Teilschnitt gemäss der in Fig. 6 angedeuteten Schnittlinie und

Fig. 8 eine Seitenansicht einer Last gemäss einer vierten Ausführungsform.

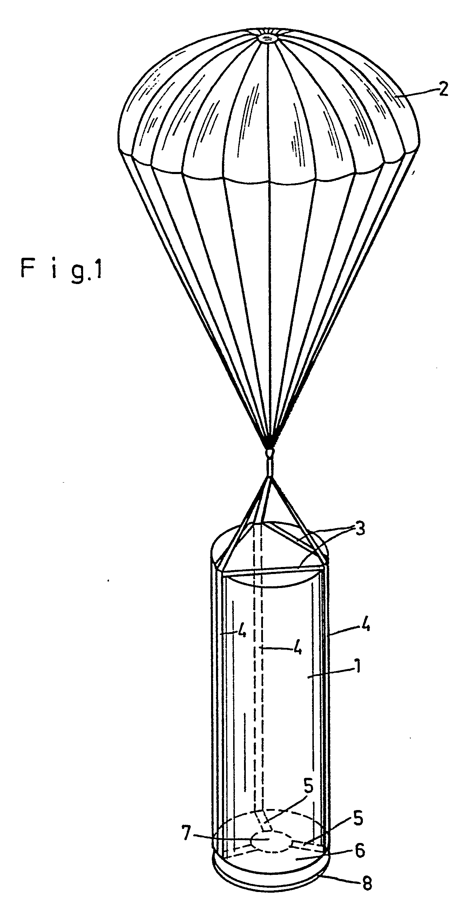

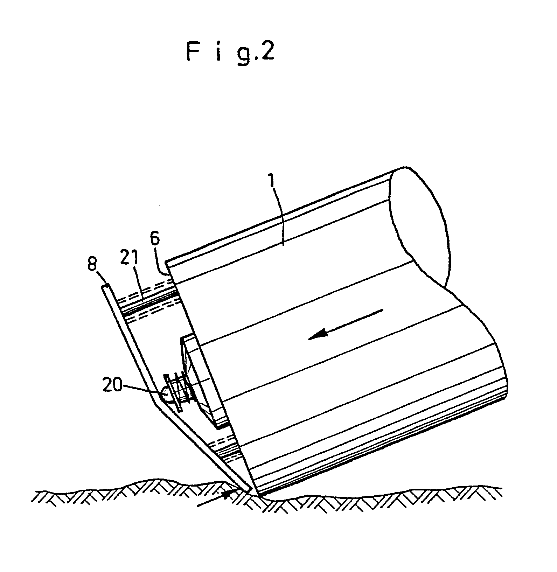

In Fig. 1 erkennt man die als langgestreckten, zylindrischen Körper angedeutete Last 1 und den Fallschirm 2, der durch ein Gurtzeug mit der Last 1 verbunden ist und drei oben durch Quergurte 3 miteinander verbundene Längsgurte 4 umfasst, deren Gurtenden 5 auf der unteren Stirnfläche 6 der Last 1 zusammengeführt und derart durch ein in Fig. 1 nicht näher bezeichnetes Verbindungsglied 7 miteinander fest verbunden sind, dass die Last 1 zwischen den Gurten 3, 4 und 5 gefesselt ist. Wenn die Verbindung 7 der Gurtenden 5 gelöst ist, ist die Last 1 von dem Gurtzeug vollkommen frei. In Abstand von der unteren Stirnfläche 6 der Last ist das als Aufprallplatte ausgebildete Aufprallglied 8 an der Last 1 befestigt. Der Fallschirm 2 ist in bezug auf die Masse der Last 1 so dimensioniert, dass diese nach dem Abwurf stabilisiert wird und sicher mit ihrem unteren Ende, d.h. mit der Aufprallplatte zuerst, auf den Boden aufkommt, wie dies in Fig. 2 angedeutet ist, wo für einen bevorzugten Anwendungsfall durch den in der Lastmitte dargestellten Pfeil angedeutet ist, dass diese mit hoher Geschwindigkeit in Pfeilrichtung und in verhältnismässig flachem Winkel mit der Kante der Aufprallplatte auf den Erdboden aufstösst. Dabei wird die Aufprallplatte in der dargestellten Weise verformt zwecks Dämpfung des Landestosses. Selbstverständlich werden auch grössere Landewinkel in Betracht gezogen. Jedoch ist das Aufprallglied 8 vornehmlich für solche Anwendungsfälle vorgesehen, in denen die Last 1 durch den Fallschirm 2 derart stabilisiert ist, dass sie mit beträchtlicher horizontaler Geschwindigkeitskomponente mit einer Kante ihrer unteren Stirnfläche 6 bzw. Prallplatte auf den Boden auftrifft.

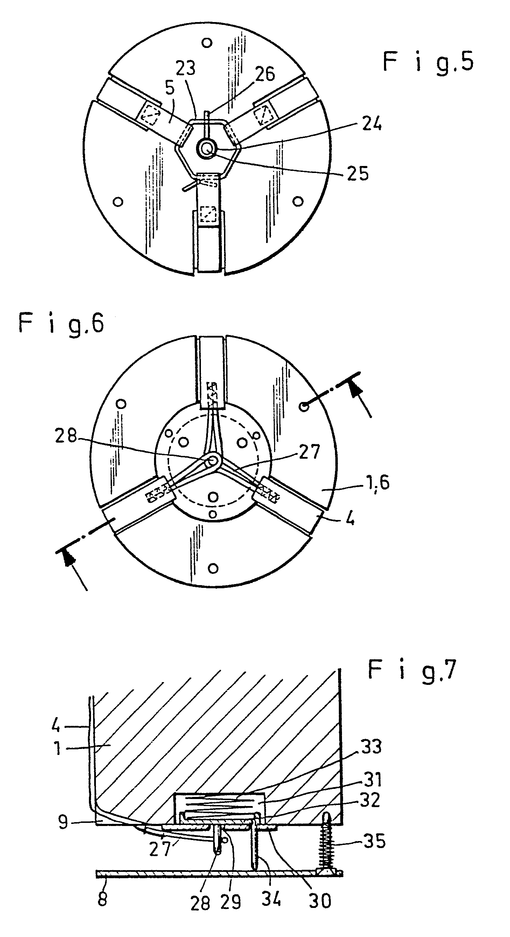

Wie man in Fig. 4 erkennt, sind die Enden 5 der Gurte 4 im Bereich der unteren Stirnfläche 6 der Last 1 in nutartigen Vertiefungen 9 geführt, damit sie bei der in Fig. 2 gezeigten Verformung der Aufprallplatte nicht zwischen dieser und der unteren Stirnfläche 6 der Last 1 eingeklemmt werden können, sondern nach Lösung voneinander leicht herausgleiten.

In der Mitte der unteren Stirnfläche 6 der Last 1 befinden sich die Einrichtungen zur Verbindung und Trennung der Gurtenden 5 mit- bzw. voneinander. Mit der Stirnfläche 6 zentrisch fest verbunden ist ein Führungskörper 10, der drei zueinander um 120° versetzte Paare von radial zu einem Kreuzungspunkt 11 führenden Nuten 12 enthält. Jedes Paar ist im Winkel einer nutförmigen Vertiefungen 9 und damit einem Gurtende 5 zugeordnet. Durch alle schlaufenförmigen Gurtenden 5 ist eine Schnur 13 gezogen, deren Weg von Gurtende zu Gurtende jeweils durch die Nuten 12 führt, wobei die von der Schnur 13 gebildeten Stränge sich im Kreuzungspunkt 11 überkreuzen, indem sie dort jeweils von einer Nut 12 zur gegenüberliegenden geführt sind. Mittels eines Knotens oder dergleichen ist die Schnur 13 bei 14 endlos geschlossen.

Der Kreuzungspunkt 11 liegt in einer Mittelvertiefung des Führungskörpers 10, die seitlich durch parallele Wände oder Kanten 15 begrenzt ist. Die Wände oder Kanten 15 bilden eine Führung für einen zylindrischen Messerkörper 16 mit ringförmig geschlossener Schneide 17, die dem Grund 18 der Vertiefung und den sich kreuzenden Strängen der Schnur 13 zugewendet ist. Der Messerkörper 16 wird durch eine Druckfeder 19 aus der Vertiefung herausgedrängt, so dass sich seine Schneide 17 im Ruhezustand im sicheren Abstand von der Schnur 13 befindet. Er wird in dieser Stellung durch seine mittig angeordnete Kappenspitze 20 an der Aufprallplatte abgestützt. Statt der Feder 19 könnte auch eine andere Kraftschwelle, beispielsweise in Form einer stufigen Verengung der Wände oder Kanten 15 vorgesehen sein, um den Messerkörper 16 im Ruhezustand daran zu hindern, sich der Schnur 13 zu nähern.

Die Aufprallplatte wird in der in Fig. 4 dargestellten Lage gehalten durch drei winkelgleich am Umfang verteilte Bolzen 21, die von verformbaren Plastikhülsen 22 als Distanzhalter umgeben sind. Dadurch wird die Ruhelage des Messerkörpers 16 klar festgelegt.

Die Plastikhülsen 22 sind unter Energieverzehr verformbar. Daher kann sich die unmittelbar vom Aufprall betroffene Kante der Aufprallplatte gemäss Fig. 2 zur Stirnfläche 6 der Last 1 hin unter Landestossdämpfung verformen. Dabei drückt ihr zentraler Teil unabhängig davon, an welcher Umfangstelle der Bodenkontakt erfolgt ist, gegen den Messerkörper 16 und drückt diesen in den Führungskörper 10 hinein, wo die Schneide 17 die Schnur 13 durchschlägt. Um einen sicheren Schnitt zu gewährleisten, kann der Führungskörper 10 oder zumindest die der Schneide 17 gegenüberliegende Grundfläche 18 aus vergleichsweise weichem Material wie Kunststoff oder Leichtmetall bestehen, in das die Schneide 17 beim Schnitt eindringen kann, um mit Sicherheit auch die letzte Faser der Schnur 13 zu durchtrennen. Damit werden die Gurtenden 5 voneinander frei und der Fallschirm 2 wird ohne jede Verzögerung im Augenblick des Aufpralls von der Last 1 gelöst.

In der Schnittendstellung befindet sich die Spitze 20 des Messerkörpers 16 in einer Entfernung von der unteren Stirnfläche 6 der Last 1, die mehr als halb so gross ist wie die Entfernung der Aufprallplatte 8 von dieser Stirnfläche 6 in Ruhestellung. Daher kommt es zu der in Fig. 2 dargestellten Biegung der Aufprallplatte, die dank Energieverzehr gleichfalls zur Landestossdämpfung beiträgt. Ausserdem hat diese Anordnung den Vorteil, dass sich die zur Verschiebung des Messerkörpers 16 und für den Schnitt zur Verfügung stehende Kraft leicht berechnen und so bemessen lässt, dass sie mit grosser Sicherheit oberhalb der im ungünstigsten Fall erforderlichen Kraft liegt.

Die zentrale Anordnung der Gurtendenverbindung und der Trenneinrichtung zwischen der Aufprallplatte und der unteren Stirnfläche 6 der Last 1 hat den Vorteil, dass die Trenneinrichtungen sehr klein und einfach ausgeführt werden können und dass das Risiko eines Fehlers in der Kraftübertragung minimal ist. Diesen Vorteil haben auch die beiden im folgenden beschriebenen Ausführungsformen.

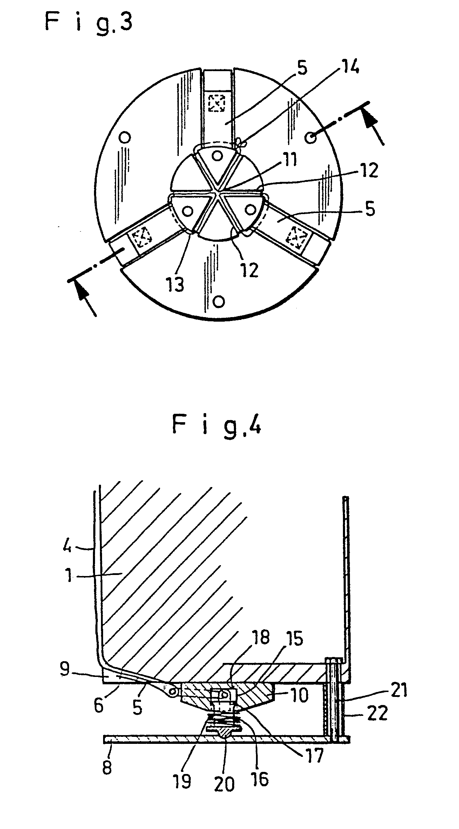

Die in Fig. 5 gezeigte Ausführungsform weicht von derjenigen gemäss Fig. 3 und 4 nur insofern ab, als die die drei Gurtenden 5 verbindende Schnur 23 ringförmig konzentrisch liegt und dass der Messerkörper, der als ein in einer axialen Bohrung 24 geführten Stift 25 ausgebildet ist, eine (oder mehrere) radiale Klinge 26 trägt. Die Funktion gleicht derjenigen der zuvor erläuterten Ausführungsform.

Im Ausführungsbeispiel gemäss Fig. 6 und 7 werden die Gurtenden 5 von Schnurschlaufen 27 gebildet. Sie sind um einen mittig und axial angeordneten Haltefinger 28 geschlungen. Da die Schlaufenspannungen sich gegenseitig ausgleichen, braucht dieser Haltefinger 28 nur die Kräfte von Schlaufe zu Schlaufe, nicht aber von den Gurten 4 auf die Last 1, zu übertragen, so dass er vergleichsweise leicht ausgeführt werden kann. Er ist axial beweglich in einer Bohrung 29 eines Deckels 30 über einer Ausnehmung 31 geführt und ist an einem Halteteller 32 befestigt, der durch die Kraft einer Druckfeder 33 in die in Fig. 7 dargestellte Stellung gedrängt ist, in welcher der Haltefinger 28 die Aussenfläche des Deckels 30 weitestmöglich überragt. Der Halteteller 32 ist ferner mit winkelgleich über den Umfang verteilten Bolzen 34 fest verbunden, die achsparallel durch Deckelbohrungen ragen und im Ruhezustand etwa bis zur Aufprallplatte reichen, die durch drei Bolzen mit Druckfeder 35 in der Ruhestellung gehalten wird.

Wenn die Aufprallplatte gemäss Fig. 2 beim Landen der Last 1 verformt wird, drückt sie auf wenigstens einen der Bolzen 34 und schiebt diesen mit dem Halteteller 32 und dem Haltefinger 28 in die Vertiefung 31 zurück, so dass der Haltefinger 28 in der Bohrung 29 verschwindet. Da ihm die Schlaufen 27 dabei nicht folgen können, werden sie abgestreift und damit frei.

Statt die Schlaufen 27 mittels eines einzigen Haltefingers 28 miteinander zu verbinden, ist es selbstverständlich auch möglich, an dem Halteteller 32 drei Haltefinger, nämlich einen für jede Schlaufe 27, exzentrisch und winkelgleich verteilt anzuordnen, wobei ein mit der Aufprallplatte zusammenwirkender Bolzen 34 zentrisch angeordnet wird.

Es können Vorkehrungen dafür getroffen sein, dass der Haltefinger 28 nicht oder nur verzögert in die Verriegelungsstellung zurückkehren kann, damit sichergestellt ist, dass die Schlaufen 27 jedenfalls aus der dargestellten Lage entwichen sind, bevor er aus der Bohrung 29 wieder austritt und sie gegebenenfalls fangen könnte. Solcher Vorkehrungen bedarf es aber bei der dargestellten Vorrichtung im allgemeinen nicht. Der Halteteller 32 wird nämlich von der Aufprallplatte exzentrisch über einen oder höchstens zwei Bolzen 34 beaufschlagt und wird sich daher schiefstellen, sobald der Haltefinger 28 nach innen durch die Bohrung 29 zurückgezogen ist. Da der Haltefinger 28 dann mit dieser Bohrung 29 nicht mehr fluchtet, kann er nicht in die Verriegelungsstellung zurückkehren.

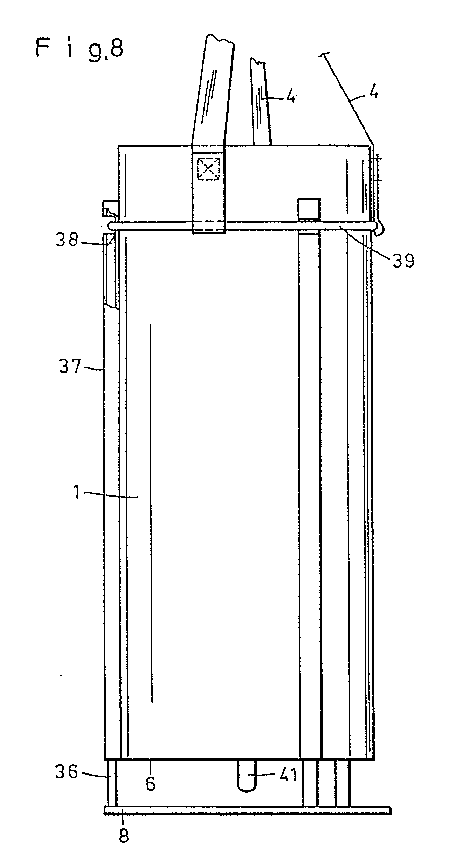

Im Ausführungsbeispiel gemäss Fig. 8 sitzt die Aufprallplatte an drei langen Stösseln 36, die ausserhalb der Last 1 unter Abdeckungen 37 achsparallel und in ihrer Längsrichtung gegen einen die Aufprallplatte in der gewünschten Ruhelage sichernden Widerstand beweglich geführt sind. Am oberen Ende sind sie mit einer Schneide 38 ausgerüstet. Durch geeignete Halterungen oberhalb dieser Schneiden 38 ist eine Befestigungsleine 39 zur Verbindung der Last 1 mit Traggurten 4 geschlossen über den Umfang geführt. Beim Landen der Last 1 wird durch die Aufprallenergie mindestens einer der Stössel 36 nach oben verschoben, wobei die Schneide 38 den Bereich der Halterung durchläuft, in welcher die Leine 39 liegt, so dass diese durchschnitten wird. Um diese Funktion zu erleichtern und um auch die für die Landestossdämpfung notwendige Verformung der Aufprallplatte zu erhalten, kann zentrisch an der unteren Stirnfläche 6 der Last 1 ein vorstehendes Widerlager 41 vorgesehen sein.

Die Bezeichnung des Aufprallglieds 8 als Platte soll nicht besagen, dass dieser Teil vollflächig geschlossen sein müsste; er kann vielmehr Durchbrechungen oder von der ebenen Oberflächengestalt abweichende Verformungen aufweisen, so dass er die Gestalt eines Rings, eines Sterns, eines Topfs, einer Haube oder dergleichen annehmen kann.

Wenn von einem zerstörbaren Auslöseglied 13, 23, 39 zwischen voneinander zu trennenden Gurtenden 5 gesprochen wird, so bedeutet dies nur vorzugsweise, nicht aber notwendigerweise, ein von den Gurtenden 5 gesondertes Element; vielmehr ist es begrifflich denkbar, dass die Gurtenden 5 im noch nicht getrennten Zustand kontinuierlich, beispielsweise als durchlaufender Gurt, ineinander übergehen und erst durch die Trennung den Charakter von Gurtenden 5 annehmen. Vor der Trennung kann dann zwischen Gurt 4, Gurtenden 5 und Auslöseglied äusserlich nicht unterschieden werden.

**Patentansprüche**

1. Anordnung zum Trennen einer Last (1) von einem damit verbundenen Fallschirm (2) beim Aufprall auf dem Erdboden, mit einem an der Aufprallseite der Last (1) angeordneten, durch seine Aufprallbewegung relativ zur Last (1) die Trennung auslösenden Aufprallglied (8), wobei die Verbindung der Last (1) mit dem Fallschirm (2) unmittelbar durch die Relativbewegung des Aufprallglieds (8) bzw. eines damit mechanisch verbundenen Teils (16, 26, 32, 38) unter Wirkung der Aufprallenergie lösbar ist, dadurch gekennzeichnet, dass die Last (1) mit dem Fallschirm (2) durch eine Mehrzahl von die Last (1) teilweise umschlingenden Gurten (4) verbunden ist, deren freie Enden (5) durch ein die Gurte (4) beim Aufprall freigebendes Auslöseglied (13, 23, 28, 39) miteinander verbunden sind.

2. Anordnung nach Anspruch 1, dadurch gekennzeichnet, dass die zu trennende Verbindung ein zerstörbares Auslöseglied (13, 23, 39) umfasst.

3. Anordnung nach Anspruch 2, dadurch gekennzeichnet, dass das Auslöseglied (13, 23, 39) zerschneidbar ist und ihm ein von dem Aufprallglied (8) betätigbares Messer (16, 26, 38) zugeordnet ist.

4. Anordnung nach Anspruch 2, dadurch gekennzeichnet, dass das Auslöseglied unter der Aufprallkraft zerbrechbar ist.

5. Anordnung nach Anspruch 1, dadurch gekennzeichnet, dass das Auslöseglied durch die Aufprallenergie aus seiner Verbindungsstellung in eine Stellung verschiebbar ist, in der die Gurtenden (5) gelöst sind.

6. Anordnung nach Anspruch 5, dadurch gekennzeichnet, dass das Auslöseglied mindestens einen quer zur Gurtendrichtung verlaufenden, in seiner Verbindungsstellung in die Gurtenden (5) eingreifenden Haltefinger (28) aufweist, der bei der Aufprallverschiebung aus den Gurtenden (5) herausziehbar ist.

7. Anordnung nach einem der Ansprüche 1 bis 6, dadurch gekennzeichnet, dass das Aufprallglied (8) plattenförmig ist und an seinem Rand durch eine zusammendrückbare und nicht ausziehbare Halteeinrichtung an der Last (1) gehalten und der von ihr durch Verschieben zu betätigende Teil des Trennmechanismus mittig zwischen ihr und der ihr zugewandten Stirnfläche (6) der Last (1) angeordnet ist.

8. Anordnung nach Anspruch 7, dadurch gekennzeichnet, dass die Halteeinrichtung von einer Mehrzahl über den Umfang verteilter Zugbolzen (21) mit nachgiebigem Gegendruckorgan gebildet ist.

9. Anordnung nach Anspruch 8, dadurch gekennzeichnet, dass das Gegendruckorgan energieverzehrend im Hinblick auf die Aufpralldämpfung bemessen ist.

10. Anordnung nach einem der Ansprüche 7 bis 9, dadurch gekennzeichnet, dass auch das Auslöseglied (13, 26, 28) mittig in bezug auf die Prallplatte angeordnet ist.

11. Anordnung nach einem der Ansprüche 3 oder 7 bis 10, dadurch gekennzeichnet, dass das Auslöseglied eine sternförmig sich kreuzende Stränge bildende Schnur (13) ist und das Messer (16) ringförmig zum Kreuzungspunkt (11) angeordnet ist.

12. Anordnung nach Anspruch 3 oder 11, dadurch gekennzeichnet, dass dem Messer (17) eine weiche Gegenfläche zugeordnet ist.

13. Anordnung nach Anspruch 11 oder 12, dadurch gekennzeichnet, dass die Lage der Schnüre (13) innerhalb des vom Messer (16) umschriebenen Kreuzungspunktes (11) und die Lage des Messers (16) durch starr miteinander verbundene Führungsteile (12, 15) gesichert sind.

14. Anordnung nach einem der Ansprüche 6 oder 7 bis 10, dadurch gekennzeichnet, dass der Haltefinger (28) durch einen die Gurtenden führenden Deckel (30) hindurchragt und an einem hinter diesem Deckel (30) angeordneten Halteteiller (32) angeordnet ist, der über Betätigungsbolzen (34) mit dem Aufprallglied (8) verbunden ist, wobei der Haltefinger (28) gegen eine nachgiebige Kraft hinter den Deckel (30) zurückziehbar ist.

15. Anordnung nach einem der Ansprüche 5, 6 oder 14, dadurch gekennzeichnet, dass eine Rückkehrsperre oder Verzögerungseinrichtung für den Haltefinger (28) vorgesehen ist.

16. Anordnung nach einem der Ansprüche 1 bis 15, dadurch gekennzeichnet, dass an den Gurtenden (5) längs der Gurte (4) verlaufende und bei Streckung derselben gespannte Federzüge vorgesehen sind.

17. Anordnung nach einem der Ansprüche 1 bis 16, dadurch gekennzeichnet, dass eine Kraftschwelle vor der Trennbewegung vorgesehen ist.

18. Anordnung nach einem der Ansprüche 1 bis 17, dadurch gekennzeichnet, dass die Gurtenden (5) im Näherungsbereich der Prallplatte (8) in schützenden Vertiefungen (9) verlaufen.

19. Anordnung nach einem der Ansprüche 1 bis 18, dadurch gekennzeichnet, dass das plattenförmige Aufprallglied (8) an seinem Rand eine mehr als doppelt so grosse freie Bewegungsstrecke zur Last (1) hin besitzt als in seiner Mitte.

20. Anordnung nach einem der Ansprüche 1 bis 19, dadurch gekennzeichnet, dass die an einer Stirnfläche (6) der Last verbundenen Gurte (4) an der gegenüberliegenden Stirnfläche durch Quergurte (3) miteinander verbunden sind.

21. Anordnung nach einem der Ansprüche 1 bis 20, dadurch gekennzeichnet, dass zur Übertragung der Relativbewegung des Aufprallglieds (8) zu dem fern von dem Aufprallglied (8) angeordneten Auslöseglied (39) mindestens ein Stössel (36) vorgesehen ist.

22. Anordnung nach Anspruch 21, dadurch gekennzeichnet, dass das Auslöseglied eine die Last (1) umschlingende Befestigungsleine (39) ist.

**Claims**

1. An arrangement for separating a load (1) from a parachute (2) attached thereto upon impact with the ground, having an impact member (8) which is disposed at the impact end of the load (1) and which effects the separation as a result of its impact movement relative to the load (1), wherein the connection of the load (1) to the parachute (2) can be released directly by the relative movement of the impact member (8) and/or a member (16, 26, 32, 38) mechanically connected there with under the action of the impact force, characterised in that the load (1) is attached to the parachute (2) by a plurality of straps (4) which partly embrace the load (1) and the free end (5) of which are joined together by a release member (13, 23, 28, 39), which frees the straps (4) upon impact.

2. An arrangement according to claim 1, characterised in that the connection to be separated comprises a destructible release member (13, 23, 39).

3. An arrangement according to claim 2, characterised in that the release member (13, 23, 39) can be cut and it is associated with a cutter (16, 26, 38) which can be actuated by the impact member (8).

4. An arrangement according to claim 2, characterised in that the release member can be broken under the impact force.

5. An arrangement according to claim 1, characterised in that as a result of the impact force the release member can be displaced from its connecting position into a position in which the strap ends (5) are released.

6. An arrangement according to claim 5, characterised in that the release member has at least one retaining finger (28) which extends transversely to the strap end direction, which in its connection position engages in the strap ends (5) and which can be withdrawn from the strap ends (5) upon impact displacement.

7. An arrangement according to any one of claims 1 to 6, characterised in that the impact member (8) is plate-like and at its rim is retained on the load (1) by a compressible and non-removable retaining means, and the part of the separating mechanism to be actuated thereby by displacement is arranged centrally between it and the end face (6) of the load (1) facing it.

8. An arrangement according to claim 7, characterised in that the retaining means comprises a plurality of peripherally spaced tension bolts (21) with a resilient counterpressure member.

9. An arrangement according to claim 8, characterised in that the counterpressure member is designed to dissipate energy with a view to impact damping.

10. An arrangement according to any one of claims 7 to 9, characterised in that the release member (13, 26, 28) is also disposed centrally in relation to the impact plate.

11. An arrangement according to any one of claims 3 of 7 to 10, characterised in that the release member is a cord (13) forming threads which intersect one another radially and the cutter (16) is disposed annularly relative to the point of intersection (11).

12. An arrangement according to claim 3 or 11, characterised in that the cutter (17) is associated with a soft countersurface.

13. An arrangement according to claim 11 or 12, characterised in that the position of the cords (13) within the point of intersection circumscribed by the cutter (16) and the position of the cutter (16) are assured by guide membres (12, 15) which are rigidly interconnected.

14. An arrangement according to any one of claims 6 or 7 to 10, characterised in that the retaining finger (28) projects through a cover (30) guiding the strap ends and is arranged on a retaining disc (32) which is disposed behind this cover (30) and which is connected to the impact member (8) by way of actuating bolts (34), it being possible for the retaining finger (28) to be withdrawn behind the cover (30) against a resilient force.

15. An arrangement according to any one of claims 5, 6 or 14, characterised in that a return lock or delary means for the retaining finger (28) is provided.

16. An arrangement according to any one of claims 1 to 15, characterised in that spring means, which extend along the straps (4) and which are tensioned when the latter are stretched, are provided at the strap ends (5).

17. An arrangement according to any one of claims 1 to 16, characterised in that a force threshold is provided before the separating movement.

18. An arrangement according to any one of claims 1 to 17, characterised in that in the vicinity of the impact plate (8) the strap ends (5) run in protective recesses (9).

19. An arrangement according to any one of claims 1 to 18, characterised in that at its rim the plate-like impact member (8) has more than twice as much free movement range relative to the load (1) than in its centre.

20. An arrangement according to any one of claims 1 to 19, characterised in that the straps (4) connected to one end face (6) of the load are connected to one another at the opposite end face by cross straps (3).

21. An arrangement according to any one of claims 1 to 20, characterised in that at least one push rod (36) is provided for transmitting the relative movement of the impact member (8) to the release member (39) disposed remote from the impact member (8).

22. An arrangement according to claim 21, characterised in that the release member is a securing line (39) encircling the load (1).

**Revendications**

1. Dispositif pour séparer une charge (1) d'un parachute (2) auquel elle est attchée au moment du choc sur le sol, comportant un organe d'impact (8) disposé du côté de la charge (1) qui heurte le sol et déclenche la séparation par son mouvement de rebondissement par rapport à la charge (1), l'attache de la charge (1) au parachute (2) pouvant être supprimée directement par le mouvement relatif de l'organe d'impact (8) ou d'un élément (16, 26, 32, 38) relié mécaniquement à celui-ci sous l'effet de l'énergie d'impact, caractérisé en ce que la charge (1) est attachée au parachute (2) par plusieurs sangles (4) qui entourent en partie la charge (1) et dont les extrémités libres (5) sont reliées entre elles par un organe de déconnexion (13, 23, 28, 39) qui libère les sangles (4) au moment du choc sur le sol.

2. Dispositif selon la revendication 1, caractérisé en ce que l'attache qui doit être séparée comprend un organe de déconnexion destructible (13, 23, 39).

3. Dispositif selon la revendication 2, caractérisé en ce que l'organe de déconnexion (13, 23, 39) peut être tranché et en ce qu'il lui est adjoint un couteau (16, 26, 38) qui peut être actionné par l'organe d'impact (8).

4. Dispositif selon la revendication 2, caractérisé en ce que l'organe de déconnexion peut se briser sous l'effet de la force d'impact.

5. Dispositif selon la revendication 1, caractérisé en ce que l'organe de déconnexion peut être déplacé sous l'effet de l'énergie d'impact, à partir de sa position d'attache, dans une position dans laquelle les extrémités (5) des sangles sont détachées.

6. Dispositif selon la revendication 5, caractérisé en ce que l'organe de déconnexion comporte au moins un doigt de retenue (28) qui s'étend perpendiculairement à la direction des sangles, s'engage dans les extrémités (5) des sangles dans sa position d'attache et peut être extrait des extrémités (5) des sangles lors du déplacement produit par le choc.

7. Dispositif selon l'une quelconque des revendications 1 à 6, caractérisé en ce que l'organe de déconnexion (8) est en forme de plaque et est maintenu sur la charge (1), au niveau de son bord, par un dispositif de retenue compressible et non extensible, et en ce que la partie du mécanisme de séparation qui doit être actionné par déplacement par lui est disposé au milieu, entre lui et la surface d'extrémité (6) de la charge (1) qui lui fait face.

8. Dispositif selon la revendication 7, caractérisé en ce que le dispositif de retenue est constitué par plusieurs boulons de traction (21) répartis sur la périphérie, avec des organes antagonistes déformables.

9. Dispositif selon la revendication 8, caractérisé en ce que les organes antagonistes sont dimensionnés de manière à consommer de l'énergie en vue de l'amorissement du choc.

10. Dispositif selon l'une quelconque des revendications 7 à 9, caractérisé en ce que l'organe de déconnexion (13, 26, 28) est également disposé au milieu par rapport à la plaque d'impact.

11. Dispositif selon l'une quelconque des revendications 3 ou 7 à 10, caractérisé en ce que l'organe de déconnexion est un cordon (13) formant des brins qui se croisent en étoile et en ce que le couteau (16) est disposé en forme d'anneau par rapport au point d'intersection (11) de ces brins.

12. Dispositif selon la revendication 3 ou 11, caractérisé en ce qu'une contre-surface molle est adjointe au couteau (17).

13. Dispositif selon la revendication 11 ou 12, caractérisé en ce que la position des cordons (13) audedans du point d'intersection (11) circonscrit par le couteau (16) et la position du couteau (16) par le couteau (16) et la position du couteau (16) sont fixées par des éléments de guidage (12, 15) unis rigidement entre eux.

14. Dispositif selon l'une quelconque des revendications 6 ou 7 à 10, caractérisé en ce que le doigt de retenue (28) pénètre à travers un couvercle (30) qui guide les extrémités des sangles et est monté sur un plateau de maintien (32) qui est disposé derrière ce couvercle (30) et qui est raccordé à l'organe d'impact (8) par des tiges d'actionnement, le doigt de retenue (28) pouvant être placé en retrait derrière le couvercle (30) contre une force antagoniste élastique.

15. Dispositif selon l'une quelconque des revendications 5, 6 ou 14, caractérisé en ce qu'il est prévu, pour le doigt de retenue (28), un suppresseur de réaction ou un dispositif de ralentissement.

16. Dispositif selon l'une quelconque des revendications 1 à 15, cractérisé en ce qu'il est prévu, au niveau des extrémités (5) des sangles, des tendeurs à ressort qui s'étendent le long des sangles (4) et qui sont tendus lors de l'étirage de celles-ci.

17. Dispositif selon l'une quelconque des revendications 1 à 16, caractérisé en ce qu'un seuil de force est prévu avant le mouvement de séparation.

18. Dispositif selon l'une quelconque des revendications 1 à 17, caractérisé en ce que dans la région où elles sont proches de la plaque d'impact (8), les extrémités (5) des sangles s'étendent dans des creux (9) destinés à les protéger.

19. Dispositif selon l'une quelconque des revendications 1 à 18, caractérisé en ce qu'au niveau de son bord, l'organe d'impact en forme de plaque (8) a, par rapport à la charge (1), une course de mouvement libre qui est plus de deux fois plus grande qu'en son milieu.

20. Dispositif selon l'une quelconque des revendications 1 à 19, caractérisé en ce que les sangles (4) fixées à l'une des surfaces d'extrémité (6) de la charge sont reliées par des sangles transversales (3) au niveau de la surface d'extrémité opposée.

21. Dispositif selon l'une quelconque des revendications 1 à 20, caractérisé en ce qu'il est prévu au moins une tige-poussoir (36) pour la transmission du mouvement relatif de l'organe d'impact (8) à l'organe de déconnexion (39) placé à distance de l'organe d'impact (8).

22. Dispositif selon la revendication 21, caractérisé en ce que l'organe de déconnexion est une corde de fixation (39) qui entoure la charge (1).

F i g.1

F i g.2

0118115

# F i g.3

# F i g.4

13

Fig.5

Fig.6

Fig.7

# F i g.8